# EUROPÄISCHE PATENTANMELDUNG

(11) **EP 4 085 757 A1**
(43) Veröffentlichungstag der Anmeldung: **09.11.2022**
(21) Anmeldenummer: 22168920.1
(22) Anmeldetag: 20.04.2022
(51) Int. Cl.: A01G 31/02, A01G 9/16

(54) **MODULARES PFLANZENAUFZUCHTHAUSHALTSGERÄT**

(30) Priorität: 04.05.2021 BE 202105360
(71) Anmelder: Miele & Cie. KG, 33332 Gütersloh (DE)
(72) Erfinder: Pawar, Nikhil, 81245 München (DE)

(57) **Zusammenfassung**

Die Erfindung betrifft ein modulares Haushaltsgerät (0), vorzugsweise ein modulares Pflanzenaufzuchthaushaltsgerät (0), mit einem Basismodul (1) mit einem Gehäuse (10), wobei innerhalb des Gehäuses (10) des Basismoduls (1) wenigstens ein Bauelement angeordnet ist, um wenigstens eine Nutzungsfunktion des Haushaltsgeräts (0) zu ermöglichen, und mit wenigstens einem ersten Nutzungsmodul (2) mit einem Gehäuse (20), wobei innerhalb des Gehäuses (20) des ersten Nutzungsmoduls (2) wenigstens ein Nutzungsraum angeordnet ist, welcher ausgebildet ist, die Nutzungsfunktion des Haushaltsgeräts (0) auszuführen, und wobei das erste Nutzungsmodul (2) mit seinem Gehäuse (20) am Gehäuse (10) des Basismoduls (1) angeordnet ist.

## Beschreibung

Die Erfindung betrifft ein modulares Haushaltsgerät, vorzugsweise ein modulares Pflanzenaufzuchthaushaltsgerät, gemäß dem Patentanspruch 1, ein Basismodul zur Verwendung in einem derartigen modularen Haushaltsgerät gemäß dem Patentanspruch 15 sowie ein Nutzungsmodul zur Verwendung in einem derartigen modularen Haushaltsgerät gemäß dem Patentanspruch 16.

Haushaltsgeräte, zu denen auch die Küchengeräte gehören, sind bisher lediglich in konkreten Bauformen bzw. Baugrößen verfügbar, welche vom Benutzer nicht verändert werden können. Dies betrifft insbesondere einen Nutzungsraum der Haushaltsgeräte, in welchem die Funktion des Haushaltsgerätes ausgeführt werden kann. Bei einem Kühlschrank als Küchengerät ist beispielsweise der Innenraum des Kühlschranks dessen Nutzungsraum, welcher mit einer Tür geöffnet und geschlossen werden kann und in welchem Lebensmittel kühl gelagert werden können. Dies gilt vergleichbar für die Tür eines Gefrierschranks bzw. für den Deckel einer Gefriertruhe ebenso wie für die Tür eines Weinkühlers.

Ein Benutzer hat somit lediglich beim Kauf des Haushaltsgerätes die Wahl zwischen sehr grob abgestuften Größen von Haushaltsgeräten, um ein Haushaltsgerät passend zum üblichen Eigenbedarf zu finden. Wird ein Haushaltsgerät mit zu kleinem Nutzungsraum gekauft, können beispielsweise nicht alle Lebensmittel kühl oder gefroren gelagert werden. Wird ein Haushaltsgerät mit zu großem Nutzungsraum gekauft, bleibt der Nutzungsraum teilweise ungenutzt, was zu unnötig erhöhten Anschaffungskosten sowie zu einem überhöhten Stromverbrauch führen kann. Auch nimmt das Haushaltsgerät mehr Raum im Haus ein als eigentlich erforderlich wäre. Ferner kann, insbesondere bei einer transparenten Glastür zum Beispiel eines Weinkühlers, der ungenutzte Nutzungsraum optisch unschön wirken.

Nachteilig ist des Weiteren, dass bei einer Veränderung des Nutzungsbedarfs des Haushaltsgerätes im Haushalt, zum Beispiel durch die Erhöhung oder Reduzierung der Nutzer, das Haushaltsgerät hinsichtlich des Nutzungsraums nicht verändert werden kann. Ein zu groß gewordenes Haushaltsgerät kann lediglich durch ein kleineres Haushaltsgerät ersetzt werden, oder umgekehrt, was jeweils jedoch zu Anschaffungskosten führt.

Dies betrifft insbesondere Haushaltsgeräte, welche der Aufzucht von Pflanzen im Haushalt und insbesondere in der Küche dienen und daher auch als Pflanzenaufzuchthaushaltsgeräte bezeichnet werden können. Diese Art der Aufzucht von Pflanzen im Haushalt wird auch als "vertical farming" bezeichnet.

Die DE 10 2015 118 059 A1 beschreibt eine Vorrichtung zur Aufzucht von Pflanzen mit einer Bewässerungsvorrichtung, einer Beleuchtungsvorrichtung, welche vorzugsweise LED-Licht erzeugt, sowie einer Matte, auf welcher Saatgut angeordnet ist und welche von den Wurzeln des Saatguts durchdringbar ist, wobei die Matte als Saat- und Pflanzmatte einen Transmissionsgrad von 0 bis 60% aufweist.

Die DE 10 2018 101 697 B3 beschreibt eine Vorrichtung zur Aufzucht von Pflanzen, die eine Bewässerungsvorrichtung, einen Aufnahmeraum zum Aufnehmen einer oder mehrerer Saatmatten, und eine Steuerungseinheit, die eingerichtet ist, mittels einer Programmsteuerung die Bewässerungsvorrichtung zu steuern, aufweist. Dabei weist die Bewässerungsvorrichtung in verschiedenen Ausführungsbeispielen ein Wasserkreislaufsystem zum Zuführen von Wasser zu den Saatmatten auf, wobei das Wasserkreislaufsystem mindestens einen Zulauf, einen Wassertank, mindestens eine Wasserkreislaufpumpe und mindestens einen Ablauf aufweist. Ferner weist die Bewässerungsvorrichtung einen Sensor auf, der eingerichtet ist, einen Leitwert des zugeführten Wassers zu ermitteln.

Derartige Pflanzenaufzuchthaushaltsgeräte weisen bisher ein Gehäuse fester Größe auf, in welchem ein Nutzungsraum ebenfalls fester Größe vorhanden ist. In dem Nutzungsraum sind mehrere Aufzuchteinheiten in der vertikalen Richtung übereinander angeordnet und ausreichend zueinander bzw. zur Innenseite des oberen Endes des Nutzungsraums beabstandet, sodass die Pflanzen in ihrer vollen Höhe wachsen können. Da unterschiedliche Pflanzensorten jedoch eine unterschiedliche Wuchshöhe haben, führt dies dazu, dass der Raum oberhalb einer Aufzuchteinheit ungenutzt bleiben kann, falls dort eine vergleichsweise flachwüchsige Pflanzensorte aufgezogen wird. Alternativ könnten verschiedene Pflanzenaufzuchthaushaltsgeräte vom Benutzer angeschafft werden, welche jeweils konstruktiv auf unterschiedliche Wuchshöhe von Pflanzen ausgelegt sind. Dies führt jedoch zu einer entsprechenden Einschränkung bei der Nutzung der jeweiligen Pflanzenaufzuchthaushaltsgeräte für eben gerade diese Pflanzensorte und insbesondere verhindert es die Verwendung dieser Pflanzenaufzuchthaushaltsgeräte für Pflanzensorten, welche eine größere Wuchshöhe aufweisen als vom Pflanzenaufzuchthaushaltsgerät ermöglicht wird. Auch kann dies die Produktionskosten der Pflanzenaufzuchthaushaltsgeräte steigern, da sich deren Variantenvielfalt erhöht, was zu einem erhöhten Aufwand in der Produktion, bei der Lagerung sowie der elektrischen Zertifizierung führen kann.

Auch können sich der Bedarf an aufzuziehenden Pflanzen und damit der Bedarf an Nutzungsraum, wie zuvor bereits beschrieben, seitens des Benutzers ändern, sodass gegebenenfalls sogar ganze Aufzuchteinheiten eines Pflanzenaufzuchthaushaltsgerätes ungenutzt bleiben können. Dies kann ebenfalls zu einem unnötigen Bedarf an elektrischer Energie führen. In jedem Fall kann auch dies zu einem Pflanzenaufzuchthaushaltsgerät führen, welches überhöhte Anschaffungskosten verursacht hat und bzw. oder einen überhöhten Platzbedarf verursacht. Eine Reduzierung des Nutzungsraums entsprechend des gesunkenen Bedarfs seitens des Benutzers ist nicht möglich, da der Nutzungsraum konstruktiv vorgegeben und die Aufzuchteinheiten fest installiert sind. Ein Entfernen einer ungenutzten Aufzuchteinheit seitens des Benutzers würde, falls konstruktiv überhaupt möglich, einen erheblichen Aufwand darstellen sowie gegebenenfalls aufgrund des Eingriffs in das Pflanzenaufzuchthaushaltsgerät zu einem Verlust der Produktgarantie führen. Dies gilt ebenso für eine Erhöhung des Nutzungsraums, welcher bisher ebenfalls lediglich durch die Anschaffung zusätzlicher und separater Pflanzenaufzuchthaushaltsgeräte erreicht werden kann.

Derartige Veränderungen des Nutzungsbedarfs und des hierdurch verursachten Bedarfs an Nutzungsraum können bei Pflanzenaufzuchthaushaltsgeräten häufiger und insbesondere schneller wechselnd auftreten als bei anderen Haushaltsgeräten wie zum Beispiel Kühlschränken, da sich die Essgewohnheiten hinsichtlich der heimisch aufgezogenen Pflanzen und dergleichen schneller und vielfältiger ändern können als im Übrigen.

Der Erfindung stellt sich somit das Problem, ein Haushaltsgerät und insbesondere ein Pflanzenaufzuchthaushaltsgerät der eingangs beschriebenen Art bereitzustellen, welches an einen sich verändernden Nutzungsbedarf angepasst werden kann. Dies soll insbesondere möglichst einfach, schnell, flexibel, intuitiv, energiesparend, bauraumsparend und bzw. oder kostensparend erfolgen können. Zumindest soll eine Alternative zu bekannten Haushaltsgeräten und insbesondere zu bekannten Pflanzenaufzuchthaushaltsgeräten geschaffen werden.

Erfindungsgemäß wird dieses Problem durch ein modulares Haushaltsgerät mit den Merkmalen des Patentanspruchs 1, durch ein Basismodul mit den Merkmalen des Patentanspruchs 15 sowie durch ein erstes Nutzungsmodul mit den Merkmalen des Patentanspruchs 16 gelöst. Vorteilhafte Ausgestaltungen und Weiterbildungen der Erfindung ergeben sich aus den nachfolgenden Unteransprüchen.

Somit betrifft die Erfindung ein modulares Haushaltsgerät, vorzugsweise ein modulares Pflanzenaufzuchthaushaltsgerät, mit einem Basismodul mit einem Gehäuse, wobei innerhalb des Gehäuses des Basismoduls wenigstens ein Bauelement angeordnet ist, um wenigstens eine Nutzungsfunktion des Haushaltsgeräts zu ermöglichen, und mit wenigstens einem ersten Nutzungsmodul mit einem Gehäuse, wobei innerhalb des Gehäuses des ersten Nutzungsmoduls wenigstens ein Nutzungsraum angeordnet ist, welcher ausgebildet ist, die Nutzungsfunktion des Haushaltsgeräts auszuführen, und wobei das erste Nutzungsmodul mit seinem Gehäuse am Gehäuse des Basismoduls angeordnet ist.

Ein derartiges erfindungsgemäßes modulares Haushaltsgerät kann insbesondere ein modulares Küchengeräte wie zum Beispiel ein modularer Kühlschrank, ein modularer Gefrierschrank, ein kombinierter modularer Kühl-/Gefrierschrank und insbesondere ein Pflanzenaufzuchthaushaltsgerät sein, wie eingangs beschrieben.

In jedem Fall werden die Funktionen eines derartigen bisher bekannten Haushaltsgerätes erfindungsgemäß auf das Basismodul und das das erste Nutzungsmodul derart aufgeteilt, dass die bestimmungsgemäße Nutzungsfunktion des Haushaltsgerätes von dem ersten Nutzungsmodul ausgeführt werden und eine entsprechende Unterstützung seitens des Basismoduls erfolgen kann. Beispielsweise kann seitens des Basismoduls Wasser zur Verfügung gestellt und gefördert werden, welches dem ersten Nutzungsmodul zugeführt und dort zum Beispiel zum Bewässern von Pflanzensetzlinge genutzt werden kann. Ebenso kann beispielsweise seitens des Basismoduls ein kalter Luftstrom erzeugt und gefördert werden, welcher dem ersten Nutzungsmodul zugeführt und dort zum Beispiel zum Kühlen oder zum Gefrieren von Lebensmitteln verwendet werden kann.

Im jedem Fall kann auf diese Art und Weise eine Aufteilung der Funktionen bekannter Haushaltsgeräte auf Basismodul und erstes Nutzungsmodul derart erfolgen, dass im Zusammenwirken von Basismodul und erstem Nutzungsmodul die bestimmungsgemäße Nutzungsfunktion des Haushaltsgerätes wie bisher bekannt zur Verfügung gestellt werden können, jedoch die hierfür erforderlichen Funktionen des Haushaltsgerätes derart aufgeteilt werden können, dass Funktionen, welche mehreren Nutzungsmodulen nacheinander oder gleichzeitig zur Verfügung gestellt werden können, auf das Basismodul verlagert werden und in den Nutzungsmodulen selbst nicht vorhanden sind. Hierdurch kann das erste Nutzungsmodul bzw. können mehrere Nutzungsmodule einfacher und insbesondere kostengünstiger ausgeführt werden. Insbesondere können mehrere Nutzungsmodule austauschbar mit dem einheitlichen Basismodul kombiniert werden, um das modulare Haushaltsgerät als Ganzes an den Bedarf bzw. an die Wünsche des Benutzers anpassen zu können, ohne dass hierfür wie bisher bekannt das Haushaltsgerät vollständig anzuschaffen bzw. auszutauschen wäre. Hierdurch kann eine Optimierung des erfindungsgemäßen modularen Haushaltsgerätes auch hinsichtlich des Energiebedarfs, des Platzbedarfs, der Anschaffungskosten und bzw. oder des optischen Anblicks erfolgen.

Insbesondere bei Pflanzenaufzuchthaushaltsgeräten ist dabei vorteilhaft, dass unterschiedliche Nutzungsmodule unterschiedlich hoch ausgebildet sein und hierdurch an die unterschiedlichen Wuchshöhe der Pflanzen angepasst sein können, sodass insbesondere diesbezüglich eine optimale Konfiguration des modularen Haushaltsgerätes hinsichtlich der aktuellen und gegebenenfalls schnell wechselnden Bedürfnisse des Benutzers erfolgen kann.

Dabei sowohl das Basismodul als auch das erste Nutzungsmodul jeweils durch ein eigenes Gehäuse zu begrenzen kann in sich geschlossene separate Module schaffen, dessen Bauteile jeweils vor äußeren Einflüssen geschützt sowie optisch verdeckt werden können. Gleichzeitig können die Gehäuse derartig ausgebildet sein, dass die einzelnen Module zum Beispiel durch aufeinander bzw. aneinander Stecken, durch ineinander Einhängen, durch aufeinander Stellen oder dergleichen formschlüssig, kraftschlüssig und bzw. oder allein durch ihr Eigengewicht miteinander zu einem Gesamtgerät kombiniert werden können. Hierdurch kann auch ein berührender Kontakt zwischen den Modulen erfolgen, um zum Beispiel über eine Steckverbindung oder auch lediglich über einen elektrischen Kontakt eine elektrische Signalübertragung und bzw. oder eine elektrische Energieübertragung zu ermöglichen. Zusätzlich oder alternativ kann zum Beispiel über eine Steckverbindung entsprechender Rohrleitungen auch eine Übertragung eines Fluids in gasförmiger oder flüssiger Form zum Beispiel als Wasserstrom oder als gekühlte Luftströmung ermöglicht werden. Dies kann eine elektrische Versorgung, eine elektrische Steuerung und bzw. oder eine fluidische Versorgung des ersten Nutzungsmodul seitens des Basismoduls ermöglichen, damit das erste Nutzungsmodul die Nutzungsfunktion des Haushaltsgerätes bestimmungsgemäß ausführen kann.

Gemäß einem Aspekt der Erfindung ist das erste Nutzungsmodul mit seinem Gehäuse, vorzugsweise lotrecht und bzw. oder unmittelbar angrenzend, in der vertikalen Richtung oberhalb des Gehäuses des Basismoduls angeordnet. Die Anordnung des ersten Nutzungsmoduls oberhalb des Basismoduls kann eine platzsparende Umsetzung des modularen Haushaltsgerätes ermöglichen. Das erste Nutzungsmodul insbesondere lotrecht oberhalb des Basismoduls, d. h. das erste Nutzungsmodul innerhalb der Grundfläche des Basismoduls, anzuordnen kann insbesondere die Stellfläche auf dem Untergrund minimal halten. Das erste Nutzungsmodul insbesondere unmittelbar angrenzend oberhalb des Basismoduls, d. h. ohne Zwischenraum, anzuordnen kann den Platzbedarf in der vertikalen Richtung minimal halten.

Gemäß einem weiteren Aspekt der Erfindung weist das erste Nutzungsmodul, vorzugsweise ferner ein zweites Nutzungsmodul, wenigstens ein Verschlusselement, vorzugsweise eine Tür, auf, welche ausgebildet ist, den Nutzungsraum des ersten Nutzungsmoduls, vorzugsweise beziehungsweise einen Nutzungsraum des zweiten Nutzungsmoduls, zu verschließen oder zugänglich zu machen. Beispielsweise kann hierdurch der Innenraum eines Kühlschranks oder eines Gefrierschrank geschlossen werden. Ebenso kann hierdurch der Aufzuchtraum eines Pflanzenaufzuchthaushaltsgerätes geschlossen werden, um dort ein für die Aufzucht der Pflanzen optimales Klima herzustellen. In jedem Fall kann dies die Nutzungsfunktion des Haushaltsgerätes ermöglichen oder verbessern.

Gemäß einem weiteren Aspekt der Erfindung ist das Basismodul ausgebildet, wenigstens ein Fluid, vorzugsweise wenigstens eine Flüssigkeit, zu fördern, wobei das erste Nutzungsmodul ausgebildet ist, das Fluid von dem Basismodul zu erhalten und für die Nutzungsfunktion des Haushaltsgeräts zu verwenden, vorzugsweise dem Nutzungsraum des ersten Nutzungsmoduls zuzuführen, wobei das Basismodul und das erste Nutzungsmodul trennbar fluidfördernd miteinander verbunden sind. Hierdurch kann ein Fluid, wie zuvor bereits erwähnt, von dem Basismodul bereitgestellt und von dem ersten Nutzungsmodul für die Nutzungsfunktion verwendet werden.

Gemäß einem weiteren Aspekt der Erfindung weist das Basismodul eine Steuerungseinheit auf, welche ausgebildet ist, wenigstens ein Bauelement des Basismoduls zu betreiben, vorzugsweise zu steuern und bzw. oder zu regeln, und wobei das erste Nutzungsmodul eine Steuerungseinheit aufweist, welche ausgebildet ist, wenigstens ein Bauelement des ersten Nutzungsmoduls zu betreiben, vorzugsweise zu steuern und bzw. oder zu regeln. Hierdurch kann sowohl für das Basismodul als auch für das erste Nutzungsmodul eine elektronische Steuerung der jeweiligen Funktionen umgesetzt werden, was den jeweiligen Funktionsumfang erhöhen kann. Dies kann insbesondere gesteuert erfolgen, was den Aufwand der Umsetzung geringhalten kann. Dies kann zusätzlich oder alternativ auch geregelt erfolgen, was die Möglichkeiten der Umsetzung der Funktionen entsprechend erhöhen kann. Beispielsweise kann eine geregelte Temperierung des Aufzuchtraums eines Pflanzenaufzuchthaushaltsgerätes eine vorgegebene Soll-Temperatur genauer erreichen als dies mit einer Steuerung möglich ist.

Gemäß einem weiteren Aspekt der Erfindung ist die Steuerungseinheit des Basismoduls ferner ausgebildet, Daten, vorzugsweise Anweisungen, für die Steuerungseinheit des ersten Nutzungsmoduls zum Betreiben des Bauelements des ersten Nutzungsmoduls zu erstellen, wobei das Basismodul ausgebildet ist, die Daten, vorzugsweise drahtlos, an das erste Nutzungsmodul zu versenden, und wobei das erste Nutzungsmodul ausgebildet ist, die Daten, vorzugsweise drahtlos, vom Basismodul zu empfangen. Hierdurch kann auch ein Teil des Betriebes, der Steuerung bzw. der Regelung des ersten Nutzungsmoduls auf das Basismodul verlagert werden, welches sozusagen als Master gegenüber dem ersten Nutzungsmodul als Slave agieren kann. Dies kann den elektronischen Aufwand zur Umsetzung des ersten Nutzungsmoduls und damit auch dessen Herstellungskosten sowie Energiebedarf reduzieren. Dies kann insbesondere dann der Fall sein, falls mehrere Nutzungsmodule gleichzeitig oder alternativ zueinander verwendet werden können sollen, da gewisse Funktionen und insbesondere zentrale bzw. höherwertige Funktionen auf das Basismodul verlagert und dort für alle Nutzungsmodule gleichermaßen verfügbar vorgesehen werden können. Dabei die entsprechende Datenübertragung drahtlos vorzusehen kann entsprechende Stecker- bzw. Kontaktverbindungen vermeiden, welche Verschleiß bzw. Beschädigung ausgesetzt sein und bzw. oder zu einem zusätzlichen Aufwand des Verbindens für den Benutzer führen könnten.

Gemäß einem weiteren Aspekt der Erfindung ist das Basismodul ausgebildet, elektrische Energie, vorzugsweise drahtlos, ganz besonders vorzugsweise mittels magnetischer Resonanz, an das erste Nutzungsmodul zu übertragen, und das erste Nutzungsmodul ausgebildet ist, die elektrische Energie, vorzugsweise drahtlos, ganz besonders vorzugsweise mittels magnetischer Resonanz, vom Basismodul zu erhalten. Auf diese Art und Weise kann zusätzlich oder alternativ eine elektrische Versorgung des ersten Nutzungsmoduls seitens des Basismoduls unter Vermeidung entsprechender Steck- oder Kontaktverbindungen erfolgen, wodurch die zuvor beschriebenen Nachteile auch hinsichtlich der elektrischen Energieübertragung vermieden werden können.

Eine drahtlose elektrische Energieübertragung kann dabei grundsätzlich sowohl zum Beispiel mittels Radiowellen oder Laserstrahlung erfolgen, wodurch üblicherweise eine drahtlose elektrische Energieübertragung auch über größere Distanzen erfolgen kann, wenngleich in Abhängigkeit der Umweltbedingungen mit gegebenenfalls signifikanten Energieverlusten. Alternativ kann eine drahtlose elektrische Energieübertragung auch zum Beispiel mittels einer magnetischen Feldkopplung mittels magnetischer Resonanz oder einer elektrischen Feldkopplung mittels Induktion erfolgen, was zwar lediglich auf vergleichsweise kurze Entfernungen sinnvoll möglich ist, jedoch bei entsprechender räumlicher Nähe zwischen Basismodul und erstem Nutzungsmodul eine effiziente drahtlose elektrische Energieübertragung ermöglichen kann. Insbesondere die magnetische Feldkopplung mittels magnetischer Resonanz kann besonders einfach und kostengünstig umgesetzt werden.

Gemäß einem weiteren Aspekt der Erfindung weist das Basismodul, vorzugsweise innerhalb seines Gehäuses, wenigstens eine drahtlose Daten- und Energieübertragungseinheit auf, welche ausgebildet ist, drahtlos sowohl wenigstens Daten an das erste Nutzungsmodul zu versenden, vorzugsweise ferner Daten von dem ersten Nutzungsmodul zu empfangen, als auch elektrische Energie, besonders vorzugsweise mittels magnetischer Resonanz, an das erste Nutzungsmodul zu übertragen, und das erste Nutzungsmodul weist, vorzugsweise innerhalb seines Gehäuses, wenigstens eine erste drahtlose Daten- und Energieübertragungseinheit auf, welche ausgebildet ist, drahtlos sowohl wenigstens Daten von dem Basismodul zu empfangen, vorzugsweise ferner Daten an das Basismodul zu versenden, als auch elektrische Energie, besonders vorzugsweise mittels magnetischer Resonanz, von dem Basismodul aufzunehmen. Hierdurch kann die drahtlose Übertragung sowohl von Daten als auch von elektrischer Energie sowohl seitens des Basismoduls als auch seitens des ersten Nutzungsmoduls über jeweils eine elektronische Einheit erfolgen, was den Aufwand hinsichtlich Umsetzungskosten, elektrischem Energieverbrauch und bzw. oder Bauraum entsprechend geringhalten kann.

Gemäß einem weiteren Aspekt der Erfindung weist die drahtlose Daten- und Energieübertragungseinheit des Basismoduls einen Daten-Modulator und einen Leistungs-Modulator auf, welche ausgebildet sind, Daten und elektrische Leistung bei unterschiedlichen Frequenzen zu einem kombinierten elektrischen Signal zu modulieren, wobei die drahtlose Daten- und Energieübertragungseinheit des Basismoduls ferner eine Spule aufweist, welche signalübertragend mit dem Daten-Modulator und mit dem Leistungs-Modulator verbunden und ausgebildet ist, das kombinierte elektrische Signal drahtlos zu versenden, wobei die drahtlose Daten- und Energieübertragungseinheit des ersten Nutzungsmoduls einen Daten-Demodulator und einen Leistungs-Demodulator aufweist, welche ausgebildet sind, Daten und elektrische Leistung unterschiedlicher Frequenzen aus dem kombinierten elektrischen Signal zu demodulieren, wobei die drahtlose Daten- und Energieübertragungseinheit des ersten Nutzungs-moduls ferner eine Spule aufweist, welche signalübertragend mit dem Daten-Demodulator und mit dem Leistungs-Demodulator verbunden und ausgebildet ist, das kombinierte elektrische Signal drahtlos zu empfangen. Hierdurch kann durch entsprechende Signalmodulation die drahtlose Übertragung sowohl von Daten als auch von elektrischer Energie sowohl seitens des Basismoduls als auch seitens des ersten Nutzungsmoduls über eine einzige Spule erfolgen, was den Aufwand hinsichtlich Umsetzungskosten, elektrischem Energieverbrauch und bzw. oder Bauraum weiter reduzieren kann.

Gemäß einem weiteren Aspekt der Erfindung weist das erste Nutzungsmodul, vorzugsweise dessen Steuerungseinheit, eine eindeutige Identifikation auf, durch welche das erste Nutzungsmodul von wenigstens einem zweiten Nutzungsmodul unterschieden werden kann. Dies kann eine eindeutige Kommunikation von Daten und insbesondere von Anweisungen seitens des Basismoduls an das erste Nutzungsmodul bzw. an ein bestimmtes Nutzungsmodul einer Vielzahl von Nutzungsmodulen ermöglichen.

Gemäß einem weiteren Aspekt der Erfindung weist das modulare Haushaltsgerät wenigstens ein zweites Nutzungsmodul mit einem Gehäuse auf, wobei innerhalb des Gehäuses des zweiten Nutzungsmoduls wenigstens ein Nutzungsraum angeordnet ist, welcher ebenfalls ausgebildet ist, die Nutzungsfunktion des Haushaltsgeräts auszuführen, und wobei das zweite Nutzungsmodul mit seinem Gehäuse am Gehäuse des ersten Nutzungsmoduls, vorzugsweise in der vertikalen Richtung oberhalb, besonders vorzugsweise lotrecht und bzw.. oder unmittelbar angrenzend, angeordnet ist. Hierdurch kann das erfindungsgemäße modulare Haushaltsgerät um ein weiteres Nutzungsmodul erweitert werden, welches gleichzeitig mit dem ersten Nutzungsmodul und insbesondere in der vertikalen Richtung oben auf dem ersten Nutzungsmodul drauf verwendet werden kann. Auch das zweite Nutzungsmodul kann wie zuvor beschrieben von dem Basismodul versorgt und bzw. oder betrieben sowie hinsichtlich Daten- und Energieübertragung mit dem ersten Nutzungsmodul verbunden werden.

Gemäß einem weiteren Aspekt der Erfindung ist das erste Nutzungsmodul ausgebildet, das Fluid von dem Basismodul zu erhalten und an das zweite Nutzungsmodul weiterzuleiten, wobei das zweite Nutzungsmodul ausgebildet ist, das Fluid von dem ersten Nutzungsmodul zu erhalten und für die Nutzungsfunktion des Haushaltsgeräts zu verwenden, vorzugsweise dem Nutzungsraum des zweiten Nutzungsmoduls zuzuführen, wobei das erste Nutzungsmodul und das zweite Nutzungsmodul trennbar fluidfördernd miteinander verbunden sind. Hierdurch können die zuvor beschriebenen entsprechenden Funktionen des ersten Nutzungsmoduls auch bei dem zweiten Nutzungsmodul umgesetzt werden.

Gemäß einem weiteren Aspekt der Erfindung weist das erste Nutzungsmodul, vorzugsweise innerhalb seines Gehäuses, wenigstens eine zweite drahtlose Daten- und Energieübertragungseinheit auf, welche ausgebildet ist, drahtlos sowohl wenigstens Daten an das zweite Nutzungsmodul zu versenden, vorzugsweise ferner Daten von dem zweiten Nutzungsmodul zu empfangen, als auch elektrische Energie, besonders vorzugsweise mittels magnetischer Resonanz, an das zweite Nutzungsmodul zu übertragen, und das zweite Nutzungsmodul, vorzugsweise innerhalb seines Gehäuses, wenigstens eine erste drahtlose Daten- und Energieübertragungseinheit aufweist, welche ausgebildet ist, drahtlos sowohl wenigstens Daten von dem ersten Nutzungsmodul zu empfangen, vorzugsweise ferner Daten an das erste Nutzungsmodul zu versenden, als auch elektrische Energie, besonders vorzugsweise mittels magnetischer Resonanz, von dem ersten Nutzungsmodul aufzunehmen. Hierdurch können die zuvor beschriebenen entsprechenden Funktionen des ersten Nutzungsmoduls auch bei dem zweiten Nutzungsmodul umgesetzt werden.

Gemäß einem weiteren Aspekt der Erfindung weist die zweite drahtlose Daten- und Energieübertragungseinheit des ersten Nutzungsmoduls einen Daten-Modulator und einen Leistungs-Modulator auf, welche ausgebildet sind, Daten und elektrische Leistung bei unterschiedlichen Frequenzen zu einem kombinierten elektrischen Signal zu modulieren, wobei die zweite drahtlose Daten- und Energieübertragungseinheit des ersten Nutzungsmoduls ferner eine Spule aufweist, welche signalübertragend mit dem Daten-Modulator und mit dem Leistungs-Modulator verbunden und ausgebildet ist, das kombinierte elektrische Signal drahtlos zu versenden, wobei die erste drahtlose Daten- und Energieübertragungseinheit des zweiten Nutzungsmoduls einen Daten-Demodulator und einen Leistungs-Demodulator aufweist, welche ausgebildet sind, Daten und elektrische Leistung unterschiedlicher Frequenzen aus dem kombinierten elektrischen Signal zu demodulieren, wobei die drahtlose Daten- und Energieübertragungseinheit des zweiten Nutzungsmoduls ferner eine Spule aufweist, welche signalübertragend mit dem Daten-Demodulator und mit dem Leistungs-Demodulator verbunden und ausgebildet ist, das kombinierte elektrische Signal drahtlos zu empfangen. Hierdurch können die zuvor beschriebenen entsprechenden Funktionen des ersten Nutzungsmoduls auch bei dem zweiten Nutzungsmodul umgesetzt werden.

Die vorliegende Erfindung betrifft auch ein Basismodul zur Verwendung in einem modularen Haushaltsgerät wie zuvor beschrieben mit einem Gehäuse, wobei innerhalb des Gehäuses wenigstens ein Bauelement angeordnet ist, um wenigstens eine Nutzungsfunktion des Haushaltsgeräts zu ermöglichen, wobei das Basismodul ausgebildet ist, so dass ein erstes Nutzungsmodul mit seinem Gehäuse am Gehäuse des Basismoduls angeordnet werden kann. Hierdurch kann ein Basismodul zur Verfügung gestellt werden, um ein modulares Haushaltsgerät wie zuvor beschrieben umsetzen und nutzen zu können.

Die vorliegende Erfindung betrifft ferner ein erstes Nutzungsmodul zur Verwendung in einem modularen Haushaltsgerät wie zuvor beschrieben mit einem Gehäuse, wobei innerhalb des Gehäuses wenigstens ein Nutzungsraum angeordnet ist, welcher ausgebildet ist, die Nutzungsfunktion des Haushaltsgeräts auszuführen, wobei das erste Nutzungsmodul ausgebildet ist, mit seinem Gehäuse am Gehäuse eines Basismoduls angeordnet zu werden. Hierdurch kann ein erstes Nutzungsmodul zur Verfügung gestellt werden, um ein modulares Haushaltsgerät wie zuvor beschrieben umsetzen und nutzen zu können.

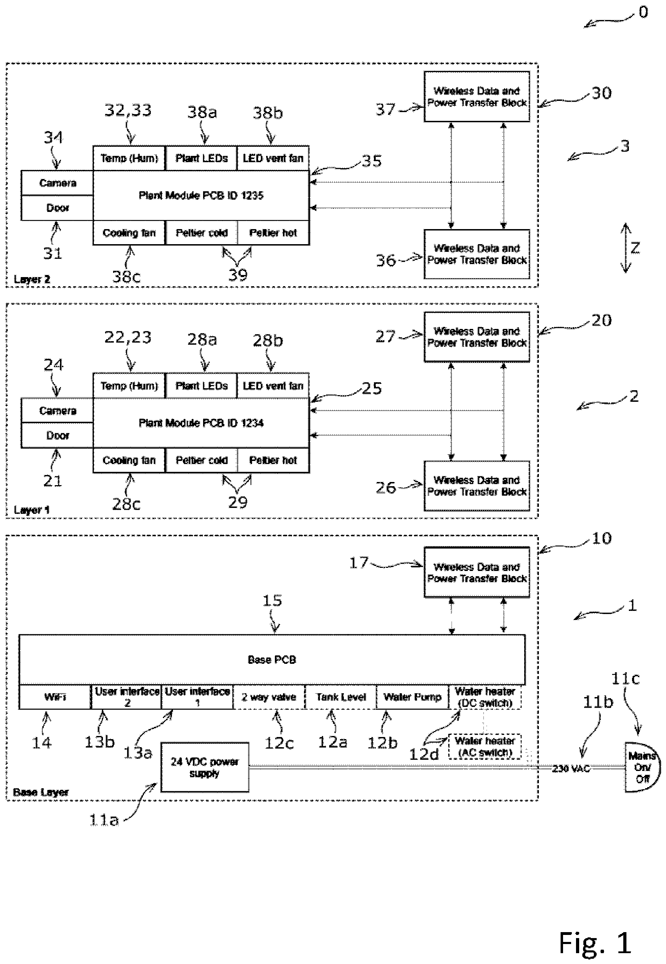

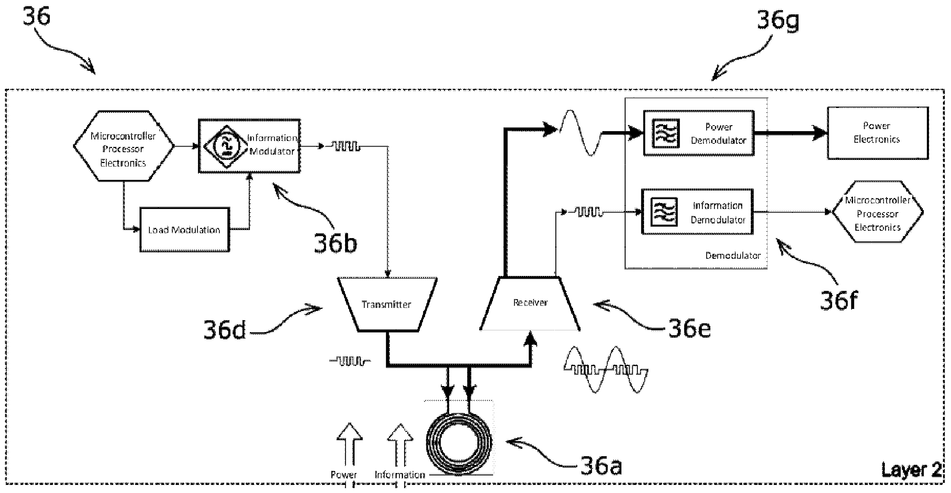

Ein Ausführungsbeispiel der Erfindung ist in den Zeichnungen rein schematisch dargestellt und wird nachfolgend näher beschrieben. Es zeigt
- Figur 1: eine schematische Darstellung eines erfindungsgemäßen modularen Haushaltsgerätes in Form eines erfindungsgemäßen Pflanzenaufzuchthaushaltsgerätes mit einem Basismodul und zwei Nutzungsmodulen; und

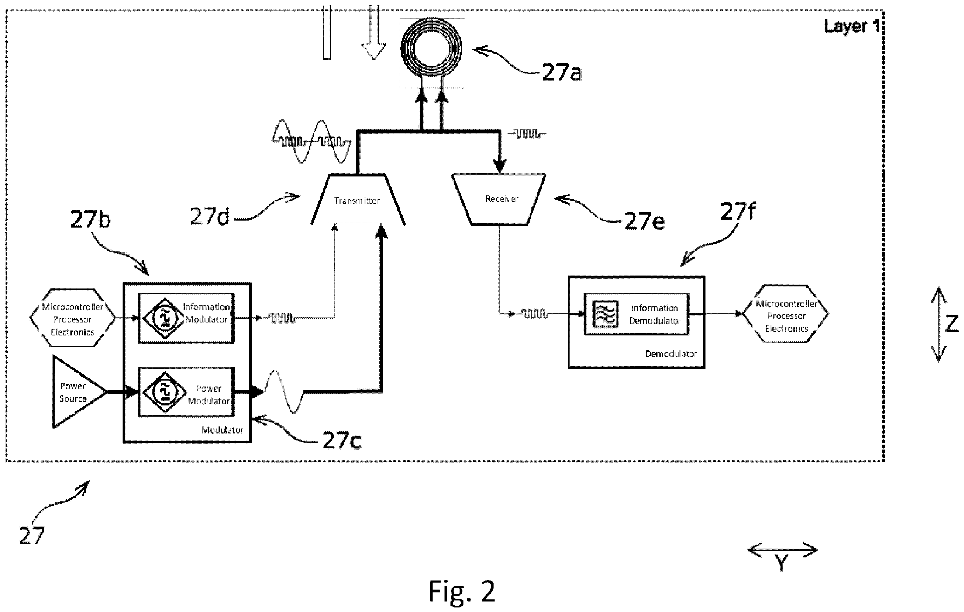

- Figur 2: eine schematische Detaildarstellung einer zweiten drahtlosen Daten- und Energieübertragungseinheit des ersten Nutzungsmoduls und einer ersten Daten- und Energieübertragungseinheit des zweiten Nutzungsmoduls.

Die o.g. Figuren werden in kartesischen Koordinaten betrachtet. Es erstreckt sich eine Längsrichtung (nicht dargestellt), welche auch als Tiefe oder als Länge bezeichnet werden kann. Senkrecht zur Längsrichtung erstreckt sich eine Querrichtung Y, welche auch als Breite Y bezeichnet werden kann. Senkrecht sowohl zur Längsrichtung als auch zur Querrichtung Y erstreckt sich eine vertikale Richtung Z, welche auch als Höhe Z bezeichnet werden kann und der Richtung der Schwerkraft entspricht. Die Längsrichtung und die Querrichtung Y bilden gemeinsam die Horizontale (nicht darstellt), welche auch als horizontale Ebene bezeichnet werden kann.

Ein erfindungsgemäßes modulares Haushaltsgerät 0 in Form eines modularen Pflanzenaufzuchthaushaltsgerätes 0 wird in einer Konfiguration betrachtet, in welcher ein Basismodul 1 in der vertikalen Richtung Z von oben direkt ein erstes Nutzungsmodul 2 und das erste Nutzungsmodul 2 ein zweites Nutzungsmodul 3 aufnimmt. Das modulare Haushaltsgerät 0 könnte alternativ auch ein modulares Küchengerät 0, ein modulares Kühlhaushaltsgerät 0 oder ein modulares Gefrierhaushaltsgerät 0 sein.

Die Module 1, 2, 3 entsprechen einander in ihrer Grundfläche in der Horizontalen betrachtet. Das Basismodul 1 steht auf einem Untergrund in Form eines Fußbodens zum Beispiel einer Küche auf und nimmt die beiden Nutzungsmodule 2, 3 in der vertikalen Richtung Z direkt aufeinander aufliegend auf sich auf. Hierzu weist das Basismodul 1 ein Gehäuse 10 auf, welches die Bauelemente des Basismoduls 1 in sich aufnimmt und zumindest im Wesentlichen nach außen hin umschließt. Dies gilt ebenso für das erste Nutzungsmodul 2 und dessen Gehäuse 20 sowie für das zweite Nutzungsmodul 3 und dessen Gehäuse 30. Das erste Nutzungsmodul 2 steht somit mit der Unterseite seines Gehäuses 20 auf der Oberseite des Gehäuses 10 des Basismoduls 1 auf. Ebenso steht das zweite Nutzungsmodul 3 mit der Unterseite seines Gehäuses 30 auf der Oberseite des Gehäuses 20 des ersten Nutzungsmoduls 2 auf.

Am Beispiel des modularen Pflanzenaufzuchthaushaltsgerätes 0 betrachtet weist das Basismodul 1 die grundlegenden Funktionen auf, welche Voraussetzungen für die Durchführung der Pflanzenaufzucht sind. So führt das Basismodul 1 die elektrische Versorgung der beiden Nutzungsmodule 2, 3 durch. Ferner weist das Basismodul 1 einen Wassertank auf oder ist mit einem Wasseranschluss verbunden (nicht dargestellt), sodass seitens des Basismoduls 1 auch ein Wasserstrom an das erste Nutzungsmodul 2 und von diesem an das zweite Nutzungsmodul 3 gefördert werden kann, wozu die Module 1, 2, 3 jeweils durch Wasseranschlüsse (nicht dargestellt) miteinander verbunden sind. Daher kann das Basismodul 1 auch als Versorgungsmodul 1 oder als Trägermodul 1 des modularen Pflanzenaufzuchthaushaltsgerätes 0 bezeichnet werden. Die beiden Nutzungsmodule 2, 3 können auch als Pflanzenmodule 2, 3 bezeichnet werden.

Zur Durchführung dieser Funktionen weist das Basismodul 1 ein Spannungsnetzteil 11a auf, welches mittels einer elektrischen Versorgungsleitung 11b durch das Gehäuse 10 hindurch mit einem elektrischen Versorgungsanschluss 11c in Form eines Netzsteckers 11c verbunden ist, welcher schaltbar ausgebildet ist und in eine Steckdose eines elektrischen Versorgungsnetzes eingesteckt werden kann, um das Basismodul 1 elektrisch zu speisen.

Innerhalb des Gehäuses 10 des Basismoduls 1 ist eine Steuerungseinheit 15 vorgesehen, welche mit weiteren elektronischen Bauteilen des Basismoduls 1 signalübertragend verbunden ist, um die entsprechenden Sensorwerte einzulesen, um die elektronischen Bauteile elektrisch zu versorgen und bzw. oder zu betreiben bzw. um Daten an die elektronischen Bauteile auszugeben. Hierzu gehören ein Wasserspeichersensor 12a, welcher auch als Wassertanksensor 12a bezeichnet werden kann, eine Wasserpumpe 12b, ein Wasserventil 12c in Form eines Zwei-Wege-Ventils 12c, eine Wasserheizung 12d, eine erste Benutzerschnittstelle 13a in Form eines Anzeigeelements 13a, eine zweite Benutzerschnittstelle 13b in Form eines Bedienelements 13b, eine drahtlose Kommunikationseinheit 14 in Form einer WiFi-Schnittstelle 14 sowie eine erste drahtlose Daten- und Energieübertragungseinheit 17.

Die beiden Nutzungsmodule 2, 3 weisen jeweils ebenfalls innerhalb ihres Gehäuses 20, 30 eine Steuerungseinheit 25, 35 auf, welche jeweils mit elektronischen Bauteilen der Nutzungsmodule 2, 3 signalübertragend verbunden ist, um ebenfalls die entsprechenden Sensorwerte einzulesen, um die elektronischen Bauteile elektrisch zu versorgen und bzw. oder zu betreiben bzw. um Daten an die elektronischen Bauteile auszugeben. Am Beispiel des ersten Nutzungsmoduls 2 betrachtet weist dieses einen Türsensor 21, einen Temperatursensor 22, einen Lufthäufigkeitssensor 23, eine Bilderfassungseinheit 24 in Form einer Kamera 24, eine erste drahtlose Daten- und Energieübertragungseinheit 26, eine zweite drahtlose Daten- und Energieübertragungseinheit 27, eine Beleuchtung 28a in Form von LEDs 28a, ein Beleuchtungsgebläse 28b, ein Kühlungsgebläse 28c sowie ein Peltier-Kühlungs-/Heizungselement 29 auf. Dies gilt identisch für das zweite Nutzungsmodul 3.

Entsprechend können, wie zuvor bereits beschrieben, zentrale Basis- bzw. Versorgungfunktionen wie das Bereitstellen und Fördern von Wasser mit einer vorbestimmten Temperatur seitens des Basismoduls 1 erfolgen, welches dann innerhalb der Nutzungsmodule 2, 3 zur Bewässerung der Pflanzen genutzt werden kann. Seitens der Nutzungsmodule 2, 3 kann ihrerseits die Beleuchtung der Pflanzen sowie eine Regulierung der Luftfeuchtigkeit und bzw. oder der Temperatur im Nutzungsraum erfolgen. Dies kann die Ausgestaltung der Nutzungsmodule 2, 3 vereinfachen. Ferner können die Nutzungsmodule 2, 3 erfindungsgemäß flexibel mit dem Basismodul 1 kombiniert werden, sodass der Benutzer das erfindungsgemäße modulare Pflanzenaufzuchthaushaltsgerät 0 seinem Nutzungsbedarf durch das Austauschen, durch das Weggelassen bzw. durch das Hinzufügen von gleichen oder unterschiedlichen Nutzungsmodulen 2, 3 anpassen kann.

Um dabei die Daten- und Energieübertragung vom Basismodul 1 zum ersten Nutzungsmodul 2 und ebenso vom ersten Nutzungsmodul 2 zum zweiten Nutzungsmodul 3 zu vereinfachen bzw. den entsprechenden Aufwand möglichst gering zu halten, können Daten und elektrische Energie gemeinsam über eine drahtlose magnetische Feldkopplung mittels magnetischer Resonanz vom Basismodul 1 zum ersten Nutzungsmodul 2 und ebenso vom ersten Nutzungsmodul 2 zum zweiten Nutzungsmodul 3 übertragen werden, wobei gleichzeitig auf diesem Wege auch Daten in der entgegengesetzten Richtung übertragen werden können.

Hierzu weist die zweite drahtlose Daten- und Energieübertragungseinheit 27 des ersten Nutzungsmoduls 2 einen Informations-Modulator 27b und parallel hierzu einen Leistungs-Modulator 27c auf, welcher ein Datensignal bzw. ein Leistungssignal an einen Sender 27d ausgeben. Das Datensignal und das Leistungssignal werden gemeinsam vom Sender 27d über eine Spule 27a durch das Gehäuse 20 des ersten Nutzungsmoduls 2 hindurch zum zweiten Nutzungsmodul 3 ausgesendet und dort von einer Spule 36a aufgenommen bzw. von einem Empfänger 36e empfangen. Der Empfänger 36e führt das Datensignal und das Leistungssignal getrennt einem Leistungs-Demodulator 36g und einem Informations-Demodulator 36f zu.

Zur Datenübertragung der umgekehrten Richtung kann ein Datensignal eines Informations-Modulators 36b über einen Sender 36d ebenfalls der Spule 36a zugeführt und durch das Gehäuse 30 des zweiten Nutzungsmoduls 3 hindurch zum ersten Nutzungsmodul 2 ausgesendet werden. Dort kann das Informationssignal von der Spule 27a aufgenommen und einem Empfänger 27e zugeführt werden, von welchem das Informationssignal einem Informations-Demodulator 27f zugeführt werden kann.

### Bezugszeichenliste (Bestandteil der Beschreibung)

- Y: Querrichtung; Breite
- Z: vertikale Richtung; Höhe

- 0: modulares Haushaltsgerät; modulares Küchengerät; modulares Kühlhaushaltsgerät; modulares Gefrierhaushaltsgerät; modulares Pflanzenaufzuchthaushaltsgerät

- 1: Basismodul; Versorgungsmodul; Trägermodul
- 10: Gehäuse des Basismoduls 1
- 11a: Spannungsnetzteil
- 11b: elektrische Versorgungsleitung
- 11c: elektrischer Versorgungsanschluss; Netzstecker
- 12a: Wasserspeichersensor; Wassertanksensor
- 12b: Wasserpumpe
- 12c: Wasserventil; zwei-Wege-Ventil
- 12d: Wasserheizung
- 13a: erste Benutzerschnittstelle; Anzeigeelement
- 13b: zweite Benutzerschnittstelle; Bedienelement
- 14: drahtlose Kommunikationseinheit; WiFi-Schnittstelle
- 15: Steuerungseinheit
- 17: drahtlose Daten- und Energieübertragungseinheit

- 2: erstes Nutzungsmodul; erstes Pflanzmodul
- 20: Gehäuse des ersten Nutzungsmoduls 2
- 21: Türsensor
- 22: Temperatursensor
- 23: Luftfeuchtigkeitssensor
- 24: Bilderfassungseinheit; Kamera
- 25: Steuerungseinheit
- 26: erste drahtlose Daten- und Energieübertragungseinheit
- 27: zweite drahtlose Daten- und Energieübertragungseinheit
- 27a: Spule der zweiten drahtlose Daten- und Energieübertragungseinheit 27
- 27b: Daten-Modulator der zweiten drahtlose Daten- und Energieübertragungseinheit 27
- 27c: Leistungs-Modulator der zweiten drahtlose Daten- und Energieübertragungseinheit 27
- 27d: Sender der zweiten drahtlose Daten- und Energieübertragungseinheit 27
- 27e: Empfänger der zweiten drahtlose Daten- und Energieübertragungseinheit 27
- 27f: Daten-Demodulator der zweiten drahtlose Daten- und Energieübertragungseinheit 27
- 28a: Beleuchtung; LEDs
- 28b: Beleuchtungsgebläse
- 28c: Kühlungsgebläse
- 29: Peltier-Kühlungs-/Heizungselement

- 3: zweites Nutzungsmodul; zweites Pflanzmodul
- 30: Gehäuse des zweiten Nutzungsmoduls 3
- 31: Türsensor
- 32: Temperatursensor
- 33: Luftfeuchtigkeitssensor
- 34: Bilderfassungseinheit; Kamera
- 35: Steuerungseinheit
- 36: erste drahtlose Daten- und Energieübertragungseinheit
- 36a: Spule der ersten drahtlose Daten- und Energieübertragungseinheit 36
- 36b: Daten-Modulator der ersten drahtlose Daten- und Energieübertragungseinheit 36
- 36d: Sender der ersten drahtlose Daten- und Energieübertragungseinheit 36
- 36e: Empfänger der ersten drahtlose Daten- und Energieübertragungseinheit 36
- 36f: Daten-Demodulator der ersten drahtlose Daten- und Energieübertragungseinheit 36
- 36g: Leistungs-Demodulator der ersten drahtlose Daten- und Energieübertragungseinheit 36
- 37: zweite drahtlose Daten- und Energieübertragungseinheit
- 38a: Beleuchtung; LEDs
- 38b: Beleuchtungsgebläse
- 38c: Kühlungsgebläse
- 39: Peltier-Kühlungs-/Heizungselement

## Patentansprüche

1. Modulares Haushaltsgerät (0), vorzugsweise modulares Pflanzenaufzuchthaushaltsgerät (0),
mit einem Basismodul (1) mit einem Gehäuse (10),
wobei innerhalb des Gehäuses (10) des Basismoduls (1) wenigstens ein Bauelement angeordnet ist, um wenigstens eine Nutzungsfunktion des Haushaltsgeräts (0) zu ermöglichen, und
mit wenigstens einem ersten Nutzungsmodul (2) mit einem Gehäuse (20),
wobei innerhalb des Gehäuses (20) des ersten Nutzungsmoduls (2) wenigstens ein Nutzungsraum angeordnet ist, welcher ausgebildet ist, die Nutzungsfunktion des Haushaltsgeräts (0) auszuführen, und
wobei das erste Nutzungsmodul (2) mit seinem Gehäuse (20) am Gehäuse (10) des Basismoduls (1) angeordnet ist.

2. Modulares Haushaltsgerät (0) nach Anspruch 1, **dadurch gekennzeichnet, dass**
das erste Nutzungsmodul (2) mit seinem Gehäuse (20), vorzugsweise lotrecht und/oder unmittelbar angrenzend, in der vertikalen Richtung (Z) oberhalb des Gehäuses (10) des Basismoduls (1) angeordnet ist.

3. Modulares Haushaltsgerät (0) nach Anspruch 1 oder 2, **dadurch gekennzeichnet, dass**
das erste Nutzungsmodul (2), vorzugsweise ferner ein zweites Nutzungsmodul (3), wenigstens ein Verschlusselement, vorzugsweise eine Tür, aufweist, welche ausgebildet ist, den Nutzungsraum des ersten Nutzungsmoduls (2), vorzugsweise beziehungsweise einen Nutzungsraum des zweiten Nutzungsmoduls (3), zu verschließen oder zugänglich zu machen.

4. Modulares Haushaltsgerät (0) nach einem der vorangehenden Ansprüche, **dadurch gekennzeichnet, dass**
das Basismodul (1) ausgebildet ist, wenigstens ein Fluid, vorzugsweise wenigstens eine Flüssigkeit, zu fördern,
wobei das erste Nutzungsmodul (2) ausgebildet ist, das Fluid von dem Basismodul (1) zu erhalten und für die Nutzungsfunktion des Haushaltsgeräts (0) zu verwenden, vorzugsweise dem Nutzungsraum des ersten Nutzungsmoduls (2) zuzuführen,
wobei das Basismodul (1) und das erste Nutzungsmodul (2) trennbar fluidfördernd miteinander verbunden sind.

5. Modulares Haushaltsgerät (0) nach einem der vorangehenden Ansprüche, **dadurch gekennzeichnet, dass**
das Basismodul (1) eine Steuerungseinheit (15) aufweist, welche ausgebildet ist, wenigstens ein Bauelement des Basismoduls (1) zu betreiben, vorzugsweise zu steuern und/oder zu regeln, und
wobei das erste Nutzungsmodul (2) eine Steuerungseinheit (25) aufweist, welche ausgebildet ist, wenigstens ein Bauelement des ersten Nutzungsmoduls (2) zu betreiben, vorzugsweise zu steuern und/oder zu regeln.

6. Modulares Haushaltsgerät (0) nach Anspruch 5, **dadurch gekennzeichnet, dass**
die Steuerungseinheit (15) des Basismoduls (1) ferner ausgebildet ist, Daten, vorzugsweise Anweisungen, für die Steuerungseinheit (25) des ersten Nutzungsmoduls (2) zum Betreiben des Bauelements des ersten Nutzungsmoduls (2) zu erstellen,
wobei das Basismodul (1) ausgebildet ist, die Daten, vorzugsweise drahtlos, an das erste Nutzungsmodul (2) zu versenden, und
wobei das erste Nutzungsmodul (2) ausgebildet ist, die Daten, vorzugsweise drahtlos, vom Basismodul (1) zu empfangen.

7. Modulares Haushaltsgerät (0) nach einem der vorangehenden Ansprüche, **dadurch gekennzeichnet, dass**
das Basismodul (1) ausgebildet ist, elektrische Energie, vorzugsweise drahtlos, besonders vorzugsweise mittels magnetischer Resonanz, an das erste Nutzungsmodul (2) zu übertragen, und
das erste Nutzungsmodul (2) ausgebildet ist, die elektrische Energie, vorzugsweise drahtlos, besonders vorzugsweise mittels magnetischer Resonanz, vom Basismodul (1) zu erhalten.

8. Modulares Haushaltsgerät (0) nach einem der vorangehenden Ansprüche, **dadurch gekennzeichnet, dass**
das Basismodul (1), vorzugsweise innerhalb seines Gehäuses (10), wenigstens eine drahtlose Daten- und Energieübertragungseinheit (17) aufweist, welche ausgebildet ist, drahtlos sowohl wenigstens Daten an das erste Nutzungsmodul (2) zu versenden, vorzugsweise ferner Daten von dem ersten Nutzungsmodul (2) zu empfangen, als auch elektrische Energie, vorzugsweise mittels magnetischer Resonanz, an das erste Nutzungsmodul (2) zu übertragen, und
das erste Nutzungsmodul (2), vorzugsweise innerhalb seines Gehäuses (20), wenigstens eine erste drahtlose Daten- und Energieübertragungseinheit (26) aufweist, welche ausgebildet ist, drahtlos sowohl wenigstens Daten von dem Basismodul (1) zu empfangen, vorzugsweise ferner Daten an das Basismodul (1) zu versenden, als auch elektrische Energie, vorzugsweise mittels magnetischer Resonanz, von dem Basismodul (1) aufzunehmen.

9. Modulares Haushaltsgerät (0) nach Anspruch 10, **dadurch gekennzeichnet, dass**
die drahtlose Daten- und Energieübertragungseinheit (17) des Basismoduls (1) einen Daten-Modulator und einen Leistungs-Modulator aufweist, welche ausgebildet sind, Daten und elektrische Leistung bei unterschiedlichen Frequenzen zu einem kombinierten elektrischen Signal zu modulieren,
wobei die drahtlose Daten- und Energieübertragungseinheit (17) des Basismoduls (1) ferner eine Spule aufweist, welche signalübertragend mit dem Daten-Modulator und mit dem Leistungs-Modulator verbunden und ausgebildet ist, das kombinierte elektrische Signal drahtlos zu versenden,
wobei die drahtlose Daten- und Energieübertragungseinheit (26) des ersten Nutzungsmoduls (2) einen Daten-Demodulator und einen Leistungs-Demodulator aufweist, welche ausgebildet sind, Daten und elektrische Leistung unterschiedlicher Frequenzen aus dem kombinierten elektrischen Signal zu demodulieren,
wobei die drahtlose Daten- und Energieübertragungseinheit (26) des ersten Nutzungsmoduls (2) ferner eine Spule aufweist, welche signalübertragend mit dem Daten-Demodulator und mit dem Leistungs-Demodulator verbunden und ausgebildet ist, das kombinierte elektrische Signal drahtlos zu empfangen.

10. Modulares Haushaltsgerät (0) nach einem der vorangehenden Ansprüche, **dadurch gekennzeichnet, dass**
das erste Nutzungsmodul (2), vorzugsweise dessen Steuerungseinheit (25), eine eindeutige Identifikation aufweist, durch welche das erste Nutzungsmodul (2) von wenigstens einem zweiten Nutzungsmodul (3) unterschieden werden kann.

11. Modulares Haushaltsgerät (0) nach einem der vorangehenden Ansprüche,
**gekennzeichnet durch**
wenigstens ein zweites Nutzungsmodul (3) mit einem Gehäuse (30),
wobei innerhalb des Gehäuses (30) des zweiten Nutzungsmoduls (3) wenigstens ein Nutzungsraum angeordnet ist, welcher ebenfalls ausgebildet ist, die Nutzungsfunktion des Haushaltsgeräts (0) auszuführen, und
wobei das zweite Nutzungsmodul (3) mit seinem Gehäuse (30) am Gehäuse (20) des ersten Nutzungsmoduls (2), vorzugsweise in der vertikalen Richtung (Z) oberhalb, besonders vorzugsweise lotrecht und/oder unmittelbar angrenzend, angeordnet ist.

12. Modulares Haushaltsgerät (0) nach Anspruch 4 und 11, **dadurch gekennzeichnet, dass**
das erste Nutzungsmodul (2) ausgebildet ist, das Fluid von dem Basismodul (1) zu erhalten und an das zweite Nutzungsmodul (3) weiterzuleiten,
wobei das zweite Nutzungsmodul (3) ausgebildet ist, das Fluid von dem ersten Nutzungsmodul (2) zu erhalten und für die Nutzungsfunktion des Haushaltsgeräts (0) zu verwenden, vorzugsweise dem Nutzungsraum des zweiten Nutzungsmoduls (3) zuzuführen,
wobei das erste Nutzungsmodul (2) und das zweite Nutzungsmodul (3) trennbar fluidfördernd miteinander verbunden sind.

13. Modulares Haushaltsgerät (0) nach Anspruch 11 oder 12, **dadurch gekennzeichnet, dass**
das erste Nutzungsmodul (2), vorzugsweise innerhalb seines Gehäuses (20), wenigstens eine zweite drahtlose Daten- und Energieübertragungseinheit (27) aufweist, welche ausgebildet ist, drahtlos sowohl wenigstens Daten an das zweite Nutzungsmodul (3) zu versenden, vorzugsweise ferner Daten von dem zweiten Nutzungsmodul (3) zu empfangen, als auch elektrische Energie, vorzugsweise mittels magnetischer Resonanz, an das zweite Nutzungsmodul (3) zu übertragen, und
das zweite Nutzungsmodul (3), vorzugsweise innerhalb seines Gehäuses (30), wenigstens eine erste drahtlose Daten- und Energieübertragungseinheit (36) aufweist, welche ausgebildet ist, drahtlos sowohl wenigstens Daten von dem ersten Nutzungsmodul (2) zu empfangen, vorzugsweise ferner Daten an das erste Nutzungsmodul (2) zu versenden, als auch elektrische Energie, vorzugsweise mittels magnetischer Resonanz, von dem ersten Nutzungsmodul (2) aufzunehmen.

14. Modulares Haushaltsgerät (0) nach Anspruch 13, **dadurch gekennzeichnet, dass**
die zweite drahtlose Daten- und Energieübertragungseinheit (27) des ersten Nutzungsmoduls (2) einen Daten-Modulator (27b) und einen Leistungs-Modulator (27c) aufweist, welche ausgebildet sind, Daten und elektrische Leistung bei unterschiedlichen Frequenzen zu einem kombinierten elektrischen Signal zu modulieren,
wobei die zweite drahtlose Daten- und Energieübertragungseinheit (27) des ersten Nutzungsmoduls (2) ferner eine Spule (27a) aufweist, welche signalübertragend mit dem Daten-Modulator (27b) und mit dem Leistungs-Modulator (27c) verbunden und ausgebildet ist, das kombinierte elektrische Signal drahtlos zu versenden,
wobei die erste drahtlose Daten- und Energieübertragungseinheit (36) des zweiten Nutzungsmoduls (3) einen Daten-Demodulator (36f) und einen Leistungs-Demodulator (36g) aufweist, welche ausgebildet sind, Daten und elektrische Leistung unterschiedlicher Frequenzen aus dem kombinierten elektrischen Signal zu demodulieren,
wobei die drahtlose Daten- und Energieübertragungseinheit (36) des zweiten Nutzungsmoduls (3) ferner eine Spule (36a) aufweist, welche signalübertragend mit dem Daten-Demodulator (36f) und mit dem Leistungs-Demodulator (36g) verbunden und ausgebildet ist, das kombinierte elektrische Signal drahtlos zu empfangen.

15. Basismodul (1) zur Verwendung in einem modularen Haushaltsgerät (0) gemäß einem der Ansprüche 1 bis 14
mit einem Gehäuse (10),
wobei innerhalb des Gehäuses (10) wenigstens ein Bauelement angeordnet ist, um wenigstens eine Nutzungsfunktion des Haushaltsgeräts (0) zu ermöglichen,
wobei das Basismodul (1) ausgebildet ist, so dass ein erstes Nutzungsmodul (2) mit seinem Gehäuse (20) am Gehäuse (10) des Basismoduls (1) angeordnet werden kann.

16. Erstes Nutzungsmodul (2) zur Verwendung in einem modularen Haushaltsgerät (0) gemäß einem der Ansprüche 1 bis 14
mit einem Gehäuse (20),
wobei innerhalb des Gehäuses (20) wenigstens ein Nutzungsraum angeordnet ist, welcher ausgebildet ist, die Nutzungsfunktion des Haushaltsgeräts (0) auszuführen,
wobei das erste Nutzungsmodul (2) ausgebildet ist, mit seinem Gehäuse (20) am Gehäuse (10) eines Basismoduls (1) angeordnet zu werden.
